# EUROPÄISCHE PATENTSCHRIFT

(11) **EP 1 194 285 B1**
(45) Veröffentlichungstag und Bekanntmachung des Hinweises auf die Patenterteilung: **19.05.2004**
(21) Anmeldenummer: 00954307.5
(22) Anmeldetag: 26.06.2000
(51) Int. Cl.: B32B 5/22

(54) **FASERVERBUNDWERKSTOFF UND VERFAHREN ZU SEINER HERSTELLUNG**
FIBRE-COMPOSITE MATERIAL AND A METHOD FOR PRODUCING THE SAME
MATIERE COMPOSITE RENFORCEE PAR FIBRES ET SON PROCEDE DE PRODUCTION

(30) Priorität: 05.07.1999 DE 19932274
(43) Veröffentlichungstag der Anmeldung: 10.04.2002
(73) Patentinhaber: Institut für Polymerforschung Dresden E.V., 01069 Dresden (DE)
(72) Erfinder: FRENZEL, Horst, D-01217 Dresden (DE); BLEDZKI, Andrzej, D-34292 Ahnatal (DE); KESSLER, Andreas, D-69115 Heidelberg (DE)
(74) Vertreter: Rauschenbach, Marion, Dipl.-Ing.
(86) Internationale Anmeldenummer: PCT/DE2000/002144
(87) Internationale Veröffentlichungsnummer: WO 2001/002164

(56) Entgegenhaltungen:
- WO-A-86/05445
- US-A- 3 943 090

## Beschreibung

### Anwendungsgebiete der Erfindung

Die Erfindung betrifft die Gebiete des Maschinenbaus und der Chemie und bezieht sich auf einen Faserverbundwerkstoff, wie er beispielsweise in Flugzeugen und in Autos zur Anwendung kommen kann und ein Verfahren zu seiner Herstellung.

### Stand der Technik

Faserverbunde sind als Leichtbauwerkstoffe den unterschiedlichsten Belastungen ausgesetzt, sollen ihre Ausgangseigenschaften aber weitgehend erhalten. Unter den mechanischen Belastungen spielen dynamische Belastungen, insbesondere wie die Schlagbeanspruchung (Impact), eine wichtige Rolle, da sie die Lebensdauer des Verbundwerkstoffes wesentlich beeinflussen. So kann es in Mehrschichtverbunden bei Stoßbelastung senkrecht zur Laminatoberfläche zwischen Lagen mit unterschiedlicher Faserorientierung zur Ausbildung von Matrixrissen und großflächigen Delaminationen kommen. Insbesondere Delaminationen sind als kritische Schäden zu bewerten, da sie unter dynamischer Werkstoffbelastung leicht weiterwachsen und bei Druckbelastung zum Ausknicken einzelner Lagen und damit zum Versagen des Bauteils führen können.

Es ist bekannt, die genannten Schäden bei Stoßbelastung dadurch zu vermindern, dass die zumeist sehr spröden duromeren Matrixharze, z.B. Epoxidharz, durch Zugabe von Modifikatoren eine höhere Bruchzähigkeit erhalten. Dies wird auf verschiedene Arten von Modifikationen durchgeführt.
- Flexibilisierung durch Zugabe von langkettigen Weichmachern oder durch Einbau von langkettigen Segmenten in die Harzstruktur (Schichert, P., Rühlmann, K. Acta Polymerica 38(1987) 10, S. 562-566)
- Dispergierung einer geringen Menge eines funktionalisierten Elastomers, eines Polyurethans oder einer Silikonverbindung in der Harzmatrix unter Bildung einer separaten Phase (EP 056427, DE 32 24 689 A1, EP 087311, US 5,089,560, US 5,025,045, Hayer, B.S. u.a. J. Adv, Mater, 28(1997) 4, S. 20-25)
- Modifizierung der duromeren Harze durch Zugabe von Thermoplasten, z.B. Polyethersulfon oder Polyetherimid (EP 099338, EP 392348, Pethrick, R.A. u.a. Macromolecules 29 (1996) 15, S. 5208-14, Bucknall,C.B. u.a. Brit. Polym. J. 15(1993)1, S. 71-75)

Die Nachteile dieser Modifizierungen sind erhöhte Produktkosten und ein mehr oder weniger starker Abfall der Steifigkeit und der Temperaturbeständigkeit der Verbunde.

Eine weitere Möglichkeit zur Erhöhung der Schlagzähigkeit von Verbunden besteht in der Verwendung von Hybridfasermaterialien als Verstärkungsfasern, wie z.B. Hybridfasern aus C- oder Glasfasern mit Polyethylen-, Aramid- oder Polyesterfasern (Jang u.a. Compos. Sci. Technol. 34(1989)4, S. 305-335).

Nachteile dieser Modifizierung sind auch eine kostenaufwendige Herstellung der Hybridfäden und die Verschlechterung von Verbundeigenschaften, insbesondere der Festigkeit und Steifigkeit.

### Beschreibung der Erfindung

Der Erfindung liegt die Aufgabe zugrunde, einen Faserverbundwerkstoff und ein Verfahren zu dessen Herstellung anzugeben, bei dem eine wesentlich geringere Delamination ohne wesentliche Verminderung anderer Verbundeigenschaften und ohne wesentliche wirtschaftliche Nachteile realisiert wird.

Die Aufgabe wird durch die in den Ansprüchen angegebene Erfindung gelöst. Weiterbildungen sind Gegenstand der Unteransprüche.

Durch die erfindungsgemäße Lösung wird es möglich Faserverbundwerkstoffe anzugeben, die in den meisten Fällen eine wesentlich geringere Delamination aufweisen und damit insbesondere gegen Schlagbeanspruchung wesentlich unempfindlicher sind.

Es ist bekannt, dass Verbunde mit einer guten Faser-Matrix-Haftung schadensresistenter sind und insbesondere bei Schlagbeanspruchung weniger Delaminationserscheinungen aufweisen.
Sie sind jedoch auch steif und spröde.

Es ist auch bekannt, dass Verbunde mit schlechter Haftung durch Grenzschichtversagen und Faser-Matrix-Reibung insbesondere deutlich mehr Energie aufnehmen können.
Sie weisen jedoch nur eine geringe Festigkeit auf.

Erfindungsgemäß werden diese beiden an sich bekannten Erscheinungen zusammen in einem Verbundwerkstoff realisiert. Dabei werden die guten Eigenschaften erhalten und die negativen Eigenschaften aber nicht.

Durch den erfindungsgemäßen Aufbau des Faserverbundwerkstoffes werden die guten und gewünschten Hafteigenschaften der Fasern mit der duromeren Matrix im Inneren des Verbundes erhalten. In den äußeren Bereichen mit geringerer oder keiner Haftung der Fasern mit der duromeren Matrix kommt es bei Belastung, insbesondere Schlagbeanspruchung, zu einer wesentlich größeren Energieaufnahme und Energieverteilung im Verbund.
Insgesamt bleibt die Festigkeit des gesamten Verbundes weitestgehend erhalten, ohne dass der Verbund versprödet. Die Delaminationsneigung der erfindungsgemäßen Verbunde ist deutlich geringer.

Die Haftwirkung der Fasern in der duromeren Matrix kann dabei diskontinuierlich oder kontinuierlich nach außen hin abnehmen. Eine kontinuierliche Abnahme wird erreicht, in dem Fasern mit Überzügen mit Abnahme der Menge der Haftvermittler in kleinen Schritten und/oder durch Zugabe von elastifizierenden Komponenten und/oder Antihaftsubstanzen in kleinen Schritten hergestellt werden, daraus jeweils eine Lage hergestellt wird und dann bei der Herstellung des Mehrlagenverbundes ein gradierter Aufbau vorgenommen wird.

### Bester Weg zur Ausführung der Erfindung

Im weiteren wird die Erfindung an einem Beispiel näher erläutert.

Es werden Glasfasern als Verstärkungsfasem eingesetzt. Dabei weist eine Gruppe von Glasfasern einen Überzug auf, der während des Faserbildungsprozesses aufgebracht worden ist und aus einer Schlichte besteht, die ein Aminosilan als Haftvermittler enthält. Die andere Gruppe von Glasfasern weist einen Überzug auf, der aus Polyethylen (ohne einen Haftvermittler) besteht. Diese Glasfasern werden getrennt in eine duromere Matrix aus dem Epoxidharzsystem Araldit LY556/HY917/DY070 (Fa. Ciba-Geigy) eingebracht und zu Lagen verarbeitet. Das Faservolumen beträgt insgesamt 58 %. Die Lagen haben die Abmessungen 60 x 60 x 2 mm.
Diese Lagen werden dann kreuzweise im Winkel von 90 ° übereinander gelagert, so dass ein achtlagiger Schichtverbund entsteht, der hinsichtlich der Haftung zwischen Fasern und Matrix folgenden Aufbau aufweist:
A: gghhhhgg
g - Lage mit Fasern mit einer geringen/keinen Haftung zur duromeren Matrix
h - Lage mit Fasern mit einer guten Haftung zur duromeren Matrix

Im Vergleich dazu sind Faserverbunde aus Glasfasern und Epoxidharz nach dem Stand der Technik hergestellt worden. Ebenfalls kreuzweise im Winkel von 90 ° sind Lagen angeordnet worden, wobei einmal nur Lagen mit hoher Haftung zwischen den Fasern und der duromeren Matrix und einmal nur Lagen mit geringer Haftung zwischen den Fasern und der duromeren Matrix eingesetzt wurden, so dass sich folgender Aufbau ergibt:
B: gggggggg
C: hhhhhhhh

Nach der Herstellung der Faserverbundwerkstoffe sind diese an einer Impactfallbolzenanlage in Anlehnung an DIN EN ISO 6603 mit einer Stoßenergie von 7,5 J belastet worden. Dann ist mit einem magnetischen Flächenmeßgerät die projizierte Delaminationsausbreitung in den einzelnen Werkstoffen bestimmt worden. Die Ergebnisse sind folgende:

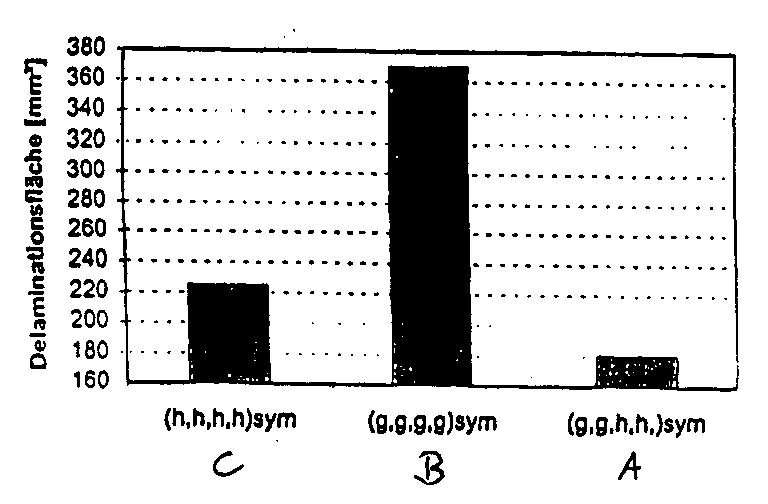

Daraus ist zu erkennen, daß der erfindungsgemäße Aufbau die geringste Delaminationsfläche aufweist.

## Patentansprüche

1. Faserverbundwerkstoff enthaltend eine duromere Matrix und Verstärkungsfasern je Lage, wobei der Werkstoff mehrlagig aufgebaut ist, bei dem die inneren Lagen Fasern enthalten, die eine hohe Haftung zur duromeren Matrix aufweisen und die äußeren Lagen Fasern enthalten, die eine geringe oder keine Haftung zur duromeren Matrix aufweisen, wobei die Anzahl der äußeren Lagen höchsten gleich groß der Anzahl der inneren Lagen ist und wobei der Übergang hinsichtlich der Haftung zwischen Fasern und Matrix von inneren zu äußeren Lagen diskontinuierlich oder kontinuierlich ist.

2. Faserverbundwerkstoff nach Anspruch 1, bei dem die Verstärkungsfasern silikatische Fasern und/oder Kohlenstoff-Fasern sind.

3. Faserverbundwerkstoff nach Anspruch 2, bei dem die silikatischen Fasern Glasfasern sind.

4. Faserverbundwerkstoff nach Anspruch 1, bei dem die Verstärkungsfasern einen Überzug aufweisen, der eine gute oder schlechte Haftung zur duromeren Matrix hervorruft.

5. Faserverbundwerkstoff nach Anspruch 4, bei dem der Überzug mit zunehmender Haftung einen zunehmenden Anteil an Haftvermittler enthält.

6. Faserverbundwerkstoff nach Anspruch 4, bei dem der Überzug mit abnehmender Haftung zusätzlich elastifizierende Bestandteile und/oder Antihaftsubstanzen enthält.

7. Faserverbundwerkstoff nach Anspruch 1, bei dem die inneren Lagen vollständig von den äußeren Lagen umschlossen sind.

8. Faserverbundwerkstoff nach Anspruch 1, bei dem ein symmetrischer Aufbau der äußeren Lagen um die inneren Lagen erfolgt.

9. Faserverbundwerkstoff nach Anspruch 1, bei dem ein gradierter Übergang von Lagen mit Fasern mit guter Haftung von innen nach außen zu Lagen mit Fasern mit schlechterer Haftung erfolgt.

10. Verfahren zur Herstellung von Faserverbundwerkstoffen, der mehrlagig aufgebaut ist, bei dem die inneren Lagen Fasern enthalten, die eine hohe Haftung zur duromeren Matrix aufweisen und die äußeren Lagen Fasern enthalten, die eine geringe oder keine Haftung zur duromeren Matrix aufweisen, bei dem die Verstärkungsfasern mit einem Überzug versehen werden, wobei der Überzug für Fasern, die eine hohe Haftung zur duromeren Matrix aufweisen sollen, einen hohen Anteil Haftvermittler aufweist und der Überzug für Fasern, die eine geringe oder keine Haftung zur duromeren Matrix aufweisen sollen, einen geringen oder keinen Anteil an Haftvermittler aufweist und/oder zusätzliche Stoffe enthält, und die überzogenen Fasern separat in eine duromere Matrix eingebracht werden, zu Lagen verarbeitet werden und der Aufbau der Lagen so erfolgt, dass im Inneren des Faserverbundwerkstoffes Lagen mit Fasern mit einer hohen Haftung zur duromeren Matrix angeordnet werden und an und/oder um diese inneren Lagen äußere Lagen angeordnet werden, die Fasern mit einer geringeren, geringen oder keiner Haftung zur duromeren Matrix aufweisen, wobei ein diskontinuierlicher oder kontinuierlicher Aufbau hinsichtlich der Haftwirkung durchgeführt wird und die Anzahl der äußeren Lagen höchstens gleich groß der Anzahl der inneren Lagen ist, und anschließend die Verarbeitung zu einem Faserverbundwerkstoff durchgeführt wird.

11. Verfahren nach Anspruch 10, bei dem die Fasern während des Faserbildungsprozesses mit dem Überzug versehen werden.

12. Verfahren nach Anspruch 10, bei dem ein Überzug für Fasern mit keiner oder geringer Haftung zur duromeren Matrix eingesetzt wird, der zusätzlich elastifizierende Komponenten und/oder Antihaftsubstanzen enthält.

## Claims

1. Fiber composite material containing a duromer matrix and reinforcing fibers per layer, with the material being constructed of multiple layers, in which the inner layers contain fibers featuring a high level of adhesion to the duromer matrix and the outer layers contain fibers featuring a low level or no adhesion to the duromer matrix, with the number of outer layers being no more than the number of inner layers and the transition of adhesion between fibers and matrix from the inner to the outer layers being discontinuous or continuous.

2. Fiber composite material according to claim 1, with the reinforcing fibers being silicate fibers and/or carbon fibers.

3. Fiber composite material according to claim 2, with the silicate fibers being glass fibers.

4. Fiber composite material according to claim 1, with the reinforcing fibers having a coating that generates a good or poor adhesion to the duromer matrix.

5. Fiber composite material according to claim 4, with the coating containing an increasing proportion of adhesion promoter with increasing adhesion.

6. Fiber composite material according to claim 4, with the coating containing additional elasticizing components and/or antiadhesive substances with decreasing adhesion.

7. Fiber composite material according to claim 1, with the inner layers being completely enclosed by the outer layers.

8. Fiber composite material according to claim 1, with the outer layers being arranged around the inner layers in a symmetrical structure.

9. Fiber composite material according to claim 1, with a graduated transition of layers with fibers with good adhesion from inside to outside to layers with fibers with poorer adhesion.

10. Process for manufacturing a fiber composite material of a multilayered structure, in which the inner layers contain fibers featuring a high level of adhesion to the duromer matrix and the outer layers contain fibers featuring a low level or no adhesion to the duromer matrix, in which the reinforcing fibers are provided with a coating, where the coating features a high proportion of adhesion promoters for fibers that are to have a high level of adhesion to the duromer matrix, and the coating features a low or no proportion of adhesion promoters and/or additional materials for fibers that are to have a low level or no adhesion to the duromer matrix, and with the coated fibers being added separately to a duromer matrix and processed into layers, and with the structure of the layers being such that layers with fibers with a high level of adhesion to the duromer matrix are arranged in the interior of the fiber composite material, and outer layers are arranged on and/or around these inner layers, featuring fibers with a lower, low or no adhesion to the duromer matrix, with a discontinuous or continuous structure being employed for the adhesive effect and the number of the outer layers being no more than the number of the inner layers, and where subsequently processing to produce a fiber composite material is carried out.

11. Process according to claim 10 in which the fibers are provided with the coating during the fiber formation process.

12. Process according to claim 10 in which a coating used for fibers with no or a low level of adhesion to the duromer matrix contains additional elasticizing components and/or antiadhesive substances.

## Revendications

1. Matériau composite à fibres contenant une matrice thermodurcissable et des fibres de renforcement par couche, le matériau étant constitué de plusieurs couches, dans le cas duquel les couches internes contiennent des fibres, qui présentent une adhésion élevée à la matrice thermodurcissable et les couches externes contiennent des fibres, qui ne présentent qu'une adhésion faible ou aucune adhésion à la matrice thermodurcissable, le nombre de couches externes étant au plus égal au nombre de couches internes et la transition pour ce qui est de l'adhésion entre les fibres et la matrice des couches internes aux couches externes étant discontinue ou continue.

2. Matériau composite à fibres selon la revendication 1, pour lequel les fibres de renforcement sont des fibres du type silicate et/ou des fibres de carbone.

3. Matériau composite à fibres selon la revendication 2, pour lequel les fibres du type silicate sont des fibres de verre.

4. Matériau composite à fibres selon la revendication 1, pour lequel les fibres de renforcement présentent un revêtement, qui engendre une bonne ou une mauvaise adhésion à la matrice thermodurcissable.

5. Matériau composite à fibres selon la revendication 4, pour lequel le revêtement contient, pour une adhésion croissante, une proportion croissante en agent promoteur de l'adhésion.

6. Matériau composite à fibres selon la revendication 4, pour lequel le revêtement contient, pour une adhésion décroissante, en outre, des constituants élastifiants et/ou des substances anti-adhésives.

7. Matériau composite à fibres selon la revendication 1, pour lequel les couches internes sont complètement entourées par les couches externes.

8. Matériau composite à fibres selon la revendication 1, pour lequel se produit une structure symétrique des couches externes autour des couches internes.

9. Matériau composite à fibres selon la revendication 1, pour lequel a lieu une transition graduée de couches à fibres ayant une bonne adhésion de l'intérieur vers l'extérieur, à des couches à fibres ayant une adhésion plus médiocre.

10. Procédé en vue de la fabrication des matériaux composites à fibres, qui sont constitués de plusieurs couches, dans le cas duquel les couches internes contiennent des fibres, qui présentent une adhésion élevée à la matrice thermodurcissable et les couches externes contiennent des fibres, qui ne présentent qu'une adhésion faible ou aucune adhésion à la matrice thermodurcissable, dans le cas duquel les fibres de renforcement sont pourvues d'un revêtement, le revêtement pour les fibres qui doivent posséder une adhésion élevée à la matrice thermodurcissable, présentant une proportion élevée d'agent promoteur de l'adhésion et le revêtement pour les fibres, qui ne doivent présenter qu'une adhésion faible ou aucune adhésion à la matrice thermodurcissable, présentant une proportion faible ou aucune proportion d'agent promoteur de l'adhésion et/ou de substances supplémentaires, et les fibres revêtues étant introduites séparément dans une matrice thermodurcissable, étant mises en oeuvre pour former des couches et la construction des couches se faisant de telle sorte que, dans l'intérieur du matériau composite à fibres, l'on dispose des couches à fibres ayant une adhésion élevée à la matrice thermodurcissable et que l'on arrange les couches externes qui présentent des fibres ayant une adhésion plus faible, faible ou aucune adhésion à la matrice thermodurcissable, sur et/ou autour de ces couches internes, une structure discontinue ou continue pour ce qui est de l'effet d'adhésion étant réalisée et le nombre de couches externes étant tout au plus égal au nombre de couches internes et la mise en oeuvre pour former un matériau composite à fibres étant exécutée par la suite.

11. Procédé selon la revendication 10, pour lequel les fibres sont pourvues du revêtement pendant le processus de formation de fibres.

12. Procédé selon la revendication 10, pour lequel on utilise un revêtement pour les fibres n'ayant qu'une adhésion faible ou n'ayant aucune adhésion à la matrice thermodurcissable, lequel revêtement contient en outre des composants élastifiants et/ou des substances anti-adhésives.
